# EUROPÄISCHE PATENTSCHRIFT

(11) **EP 3 806 383 B1**
(45) Veröffentlichungstag und Bekanntmachung des Hinweises auf die Patenterteilung: **25.09.2024**
(21) Anmeldenummer: 20199501.6
(22) Anmeldetag: 01.10.2020
(51) Int. Cl.: H04L 9/08, H04W 4/80, H04W 12/50

(54) **VERFAHREN ZUM PAAREN EINES ZÄHLERS MIT EINEM KOMMUNIKATIONSMODUL**
METHOD FOR PAIRING A METER WITH A COMMUNICATION MODULE
PROCÉDÉ D'ASSOCIATION D'UN COMPTEUR À UN MODULE DE COMMUNICATION

(30) Priorität: 08.10.2019 DE 102019006989
(43) Veröffentlichungstag der Anmeldung: 14.04.2021
(73) Patentinhaber: Diehl Metering Systems GmbH, 90451 Nürnberg (DE)
(72) Erfinder: Kvesic, Adrian, 90766 Fürth (DE); Joppich-Dohlus, Petra, 91080 Rathsberg (DE); Schmidt, Christoph, 90403 Nürnberg (DE); Schmitz, Stefan, 90455 Nürnberg (DE); Jambor, Christian, 90449 Nürnberg (DE)
(74) Vertreter: Diehl Patentabteilung

(56) Entgegenhaltungen:
- DE-A1- 102018 202 176
- US-A1- 2014 359 724

## Beschreibung

Die Erfindung betrifft ein Verfahren zum Paaren eines Zählers mit einem Kommunikationsmodul zum Aufbau einer Kommunikationsverbindung zwischen beiden.

Aus der Praxis ist es bekannt, ein Kommunikationsmodul zur Kommunikation von Zählerdaten entweder mechanisch oder per Draht mit einem Zähler zu verbinden. Bei dieser Verbindung werden Mechanismen zur Sicherung von Daten, wie zum Beispiel Identifizierung, Authentifizierung und Verschlüsselung, verwendet.

Aus der DE 10 2018 202 176 A1 ist ein Master-Slave-System zur Kommunikation über eine Bluetooth-Low-Energy-Verbindung bekannt. Während eines Anfragevorgangs wird durch die Verschlüsselung der Identitätsinformation die Anonymität der Slaveeinrichtung gegenüber anderen, über dieselben Advertising-Kanäle kommunizierenden, Slaveeinrichtungen oder sonstige Geräte gewahrt. Die verwendeten Schlüssel sind insbesondere Identity Resolving Keys (IRK). Diese werden vorab an die Mastereinrichtungen in dem Master-Slave-System übertragen.

Aus der US 2014/0359724 A1 ist ein Kommunikationssystem mit einer ersten Kommunikationsvorrichtung bekannt. Zum Übertragen temporärer Authentifizierungsinformationen umfasst das Kommunikationssystem eine zweite Kommunikationsvorrichtung mit einem zweiten Kommunikationsbereich. Wenn sich eine mobile Computervorrichtung im zweiten Kommunikationsbereich befindet, kann sie Authentifizierungsinformationen von der zweiten Kommunikationsvorrichtung anfordern, um auf die erste Kommunikationsvorrichtung zuzugreifen. Um diese temporäre Authentisierungsinformation ausschließlich an ein tatsächlich an eine Wartung beteiligte mobile Computervorrichtung zu übermitteln, ist der zweite Kommunikationsbereich in einem sicheren Bereich angeordnet, der nur zugänglich ist für autorisierte Personen, insbesondere für Wartungspersonal. In einem Flugzeug wäre ein geeigneter Bereich das Cockpit.

Aufgabe der Erfindung ist es, die Kommunikationsverbindung zwischen Zähler und Kommunikationsmodul zu verbessern.

Die Aufgabe der Erfindung wird gelöst durch ein Verfahren gemäß Patentanspruch 1 zum Paaren eines Zählers mit einem Kommunikationsmodul. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Paaren bzw. die Paarung dient zum Aufbau einer Kommunikationsverbindung zwischen beiden, also zwischen Zähler und Kommunikationsmodul.

Zähler und Kommunikationsmodul bilden zusammen eine Zähleranordnung. Der Zähler dient zur Erfassung einer Verbrauchsgröße (z.B. ein Kubikmeterwert) eines Verbrauchsmediums (z.B. Erdgas oder Wasser). Das Kommunikationsmodul ist insbesondere vom Zähler physisch getrennt. Dies bedeutet, es sind Zähleranordnungen bzw. Zähler mit einem gemeinsamen äußeren Gehäuse denkbar, die aber trotzdem intern physisch / mechanisch getrennt sind (prepaired, vor-gepaart, siehe unten).

Ein Zählernetz enthält neben der Zähleranordnung außerdem eine Gegenstelle, z.B. ein Head-End-System, für die Zähleranordnung bzw. den Zähler. Die Gegenstelle ist in einem Weitbereichsnetz (WAN, wide area network, z.B. dem Internet) angeordnet und über einen Zugangspunkt zum WAN erreichbar.

Der Zähler und das Kommunikationsmodul können zu einer - insbesondere drahtlosen - Nahbereichskommunikation gepaart werden. Das Kommunikationsmodul und die Gegenstelle sind zu einer - insbesondere drahtlosen - Weitbereichskommunikation verbindbar.

"Nahbereich" (NB) bedeutet insbesondere jeweils weniger als 10cm oder 50cm oder 1m oder 5m oder 10m oder 100m. "Weitbereich" (WB) bedeutet insbesondere jeweils mehr als 10cm oder 50cm oder 1m oder 5m oder 10m oder 100m oder 1km. Die Gegenstelle (auch Endpunkt) ist insbesondere ein Kopfende- oder Kopfstellensystem (head-end-system), z.B. ein Portal eines Energieversorgungsunternehmens. Die Verbrauchsgröße bzw. deren Wert ist insbesondere ein Messwert, z.B. ein aktueller Wert bzw. eine Momentaufnahme, wie ein Zählerwert, eine elektrische Momentanleistung, usw. Alternativ ist die Verbrauchsgröße ein Wert für einen Zeitraum, wie z.B. ein Tages-Monats- oder Jahres-Gesamtverbrauch usw.

Im Betrieb sind innerhalb des Zählernetzes Daten zwischen dem Zähler und der Gegenstelle über das Kommunikationsmodul zu kommunizieren. Die Kommunikation verläuft dabei über die Nahbereichskommunikation, das Kommunikationsmodul und die Weitbereichskommunikation bzw. in Gegenrichtung. Zu kommunizierende Daten sind zum Beispiel Werte der Verbrauchsgröße mit zugehörigem Zeitstempel vom Zähler zur Gegenstelle oder Konfigurationsdaten von der Gegenstelle zum Zähler.

Bei dem Verfahren wird dem Kommunikationsmodul ein erster Identitäts-Schlüssel für die Paarung zugewiesen. Dem Zähler wird ein zweiter Identitäts-Schlüssel für die Paarung zugewiesen. Beide Schlüssel werden innerhalb einer Schutzumgebung im Kommunikationsmodul abgelegt. Dies bedeutet, dass sich dabei das Kommunikationsmodul in der Schutzumgebung befindet. Anschließend wird das Kommunikationsmodul aus der Schutzumgebung entfernt.

Die Schutzumgebung stellt sicher, dass ein Schlüsselmissbrauch (z.B. Mithören / Mitlesen / Entwenden / ...) gegenüber einer regulären Umgebung, zum Beispiel im Feld, verhindert ist. Die Schutzumgebung ist zum Beispiel ein isolierter, durch Absperrungen, Zugangskontrollen, elektromagnetische Abschirmung usw. abgesicherter Bereich innerhalb einer Produktionsumgebung.

Beide Schlüssel werden auf einem geschützten Weg im Zähler abgelegt. Anschließend werden der Zähler und das Kommunikationsmodul außerhalb der Schutzumgebung unter Verwendung der beiden Schlüssel gepaart. Geschützte Wege erstrecken sich dabei insbesondere von der Schlüsselerzeugung bis zur Ablage im Zähler und/oder im Kommunikationsmodul bzw. bis zum Verwahrort der Schlüssel.

Die Schlüssel werden zuvor erzeugt, bevor sie dem Zähler und dem Kommunikationsmodul zugewiesen werden. Der "geschützte Weg" entspricht bezüglich seiner Sicherheit dem Schutzbereich. Der Weg kann sich dabei innerhalb der Schutzumgebung befinden oder auch eine "geschützte Verlängerung" oder "geschützte Enklave" der Schutzumgebung außerhalb dieser darstellen. Insbesondere ist die Schutzumgebung Teil einer Fertigungsstätte für das Kommunikationsmodul.

Beide Schlüssel zusammen bilden ein Schlüsselpaar, das für die Paarung bzw. in diesem Zusammenhang für eine Authentifizierung, Identifizierung, Verschlüsselung usw. genutzt wird.

Insbesondere wird mindestens das eine, das heißt optional auch mehrere Schlüsselpaare erzeugt und/oder im Zähler und/oder im Kommunikationsmodul abgelegt.

Da die Schlüssel insbesondere nur innerhalb der Schutzumgebung und/oder nur auf geschützten Wegen verwahrt und/oder transportiert werden, bleiben die Schlüssel vor einem unerlaubten Zugriff stets geschützt. Insbesondere ergibt sich so ein unterbrechungsfreier Schutz bei Transport und/oder Aufbewahrung der Schlüssel.

Beide Schlüssel werden in einem geschützten Datenobjekt bevorratet. Insbesondere werden die Schlüssel nach deren Erzeugung in das Datenobjekt eingebracht. Auch das Datenobjekt kann sich dabei innerhalb der Schutzumgebung befinden oder auch eine "geschützte Verlängerung" oder "geschützte Enklave" der Schutzumgebung außerhalb dieser darstellen. Die Schlüssel werden innerhalb der Schutzumgebung in das Datenobjekt verbracht und innerhalb des Datenobjekts - sozusagen geschützt durch Einkapselung - aus der Schutzumgebung entfernt. So bleiben Sie stets lückenlos geschützt. Das Datenobjekt bildet sozusagen einen geschützten "Container" für die Verwahrung und/oder den Transport der Schlüssel.

Beide Schlüssel werden aus dem geschützten Datenobjekt heraus auf einem geschützten Weg im Zähler abgelegt. So können die Schlüssel gesichert in den Zähler eingebracht werden.

Die Schlüssel werden im Zähler abgelegt, wenn sich dieser außerhalb der Schutzumgebung befindet. Eine Einbringung der Schlüssel ist somit zum Beispiel auch bei einem Zähler möglich, der bereits im Feld montiert ist.

In einer bevorzugten Ausführungsform wird als Kommunikationsverbindung eine Nahbereichs(NB)-Verbindung aufgebaut. Insbesondere ist die Verbindung eine Bloutooth-Low-Energy(BLE)-Verbindung. Insbesondere ist die Verbindung eine Low-Energy(LE)-Secure-Connection, insbesondere in der Version "Just Works". Das Paaren bzw. die Paarung von Zähler und Kommunikationsmodul findet dann im Rahmen bzw. innerhalb der jeweiligen Kommunikationsverbindung, zum Beispiel als Bluetooth(BT)-Pairing statt.

In einer bevorzugten Variante dieser Ausführungsform werden als Schlüssel Identity-Resolving-Keys (IRKs) im Rahmen der Bluetooth-Technologie verwendet. Gerade für diese speziellen Schlüssel bzw. Technologien bringt die Erfindung besondere Sicherheitsvorteile, z.B. gegen Hackingangriffe etc., da die Schlüssel vor einem unberechtigten Zugriff gegenüber einem Standard-Paarungs-Vorgehen besser geschützt sind.

Die Schlüssel werden innerhalb der Schutzumgebung erzeugt. Die Sicherheit wird so weiter erhöht, da die Schlüssel ab ihrer Erzeugung innerhalb der Schutzumgebung geschützt sind.

Die Schlüssel werden mit Hilfe des Kommunikationsmoduls erzeugt. Somit ist keine zusätzliche Vorrichtung zur Schlüsselerzeugung notwendig.

Die Schlüssel werden dadurch erzeugt, dass das Kommunikationsmodul innerhalb der Schutzumgebung mit einem Pairing-Partner vor-gepaart wird, der sich innerhalb der Schutzumgebung befindet. Als Pairing-Partner wird insbesondere ein solcher verwendet, der vom Zähler verschieden ist. Mit anderen Worten wird ein "Dummy"-Partner bzw. - zähler in der Schutzumgebung benutzt, um den späteren Zähler zur Schlüsselerzeugung zu simulieren und die Schlüsselerzeugung innerhalb der Schutzumgebung durchzuführen. Die Schlüsselerzeugung kann somit besonders sicher und unabhängig vom eigentlichen Zähler erfolgen.

In einer bevorzugten Ausführungsform werden ausgehend von beiden Schlüsseln als ersten Schlüsseln zweite oder optional sogar noch mehrere weitere Schlüssel erzeugt. Die zweiten Schlüssel werden erst dann erzeugt, wenn sich das Kommunikationsmodul und der Zähler außerhalb der Schutzumgebung befinden, und die zweiten Schlüssel werden anstelle der ersten Schlüssel für das weitere Paaren bzw. die weitere Kommunikation benutzt. Somit kann eine weitere Sicherheitsstufe geschaffen werden, falls Sicherheitsbedenken bezüglich der ersten Schlüssel bestehen.

In einer bevorzugten Variante dieser Ausführungsform werden die zweiten Schlüssel in einem geschützten Datenobjekt bevorratet. Hierbei kann es sich um das selbe bereits oben genannte oder ein anderes Datenobjekt handeln. So können die Schlüssel an die selbe oder eine andere Schutzumgebung übertragen und dort bevorratet werden.

In einer alternativen Ausführungsform zu oben (also zur Erzeugung zweiter Schlüssel) wird im Kommunikationsmodul eine Möglichkeit zur Erzeugung und/oder Einspielung zweiter und weiterer Schlüssels dauerhaft abgeschaltet oder gar nicht vorgesehen. Die böswillige Erzeugung / Einspielung weiterer Schlüssel, um die unbekannten ersten Schlüssel zu umgehen, ist somit ausgeschlossen. Die Abschaltung kann insbesondere nach der Erzeugung von Schlüsseln mithilfe des Kommunikationsmoduls und/oder nach Einspeisen der ersten Schlüssel in das Kommunikationsmodul, insbesondere noch innerhalb der Schutzumgebung erfolgen. Somit ist sichergestellt, dass ab einem bestimmten Zeitpunkt und/oder außerhalb der Schutzumgebung keine weiteren Schlüsselpaare eingespielt werden können.

In einer bevorzugten Ausführungsform enthält das Kommunikationsmodul und/oder der Zähler eine Kommunikations-Hardware für den Betrieb der Kommunikationsverbindung. Im Kommunikationsmodul und/oder im Zähler wird dann neben der Kommunikationshardware ein Secure-Element vorgesehen, das die Schlüssel verwaltet. Unter "Verwalten" ist dabei z.B. die hochsichere Erzeugung, Speicherung, Weiterverarbeitung der Schlüssel, die Erzeugung von hochsicheren Zufallszahlen, die Ver- und Entschlüsselung von Nachrichten, die Berechnung von Hashsummen usw. - unter Verwendung der Schlüssel - zu verstehen. Somit kann der Sicherheitslevel eines Kommunikationsmoduls gegenüber einer üblichen Kommunikations-Hardware (z.B. handelsübliche Bluetooth-Komponenten) gesteigert werden.

In einer bevorzugten Ausführungsform werden die Schlüssel mit Hilfe eines sich außerhalb der Schutzumgebung befindlichen Mobilgerätes (Mobile Device) im Zähler abgelegt. Insbesondere kann dieses Mobilgerät zum Beispiel das geschützte Datenobjekt enthalten und/oder einen geschützten Weg / Datenkanal für den Transport von Schlüsseln zur Verfügung stellen. Somit ist es möglich, einen z.B. bereits im Feld installierten Zähler vor Ort sicher mit Schlüsseln zu versorgen.

In einer bevorzugten Ausführungsform wird dem Zähler und/oder dem Kommunikationsmodul eine eindeutige Kennung verliehen und eine Zuordnung zwischen der Kennung und den Schlüsseln wird innerhalb der Schutzumgebung und/oder im geschützten Datenobjekt bevorratet. Somit kann festgehalten bzw. festgelegt und verifiziert werden, welche Schlüssel in welche Zähler und/oder Kommunikationsmodule einzubringen sind usw.

Die Erfindung beruht auf folgenden Erkenntnissen, Beobachtungen bzw. Überlegungen und weist noch die nachfolgenden Ausführungsformen auf. Die Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Die Erfindung beruht auf der Idee, dass (mindestens) zwei Geräte vorhanden sind, die Daten miteinander austauschen. Eines davon ist der Zähler, das (die) andere(n) ist (sind) ein (mehrere) Radio-Network-Access(RNA)-Modul(e) (hier beispielhaft für Kommunikationsmodule). In der Anmeldung wird der Einfachheit halber stellvertretend für die Allgemeinheit stets nur von einem einzigen Kommunikationsmodul ausgegangen.

Zähler und RNA-Modul sind mit BLE (hier stellvertretend für allgemeine Nahbereichs-Kommunikationstechnologien) ausgestattet, damit eine Verbindung zwischen Zähler und RNA-Modul aufgebaut werden kann.

Das RNA-Modul dient dazu, die Daten des Zählers über die BLE-Verbindung zu empfangen und mit einer Radio-Netzwerktechnologie (z.B. WAN) zu versenden an zum Beispiel einen Server (z.B. Gegenstelle im Zählernetz). Bei bidirektionaler Kommunikation werden Daten vom Radio-Netzwerk empfangen und über die BLE-Verbindung an den Zähler geschickt.

Ziel der Erfindung ist es, sicherzustellen, dass bei der NB-Kommunikation (z.B. BLE) der Leistungsverbrauch bei Identifizierung, Authentifizierung und Verschlüsselung in jedem Anwendungsfall vorhersehbar niedrig ist, zu keiner Zeit den Leistungsverbrauch beeinflusst und/oder die Funktionalität einschränkt.

Gemäß der Erfindung wird eine dauerhafte, authentifizierte und sichere Verbindung zwischen einem Zähler und einem externen Modul mittels BLE erstellt, die die oben genannten Eigenschaften aufweist.

Beide Kommunikationspartner besitzen den Identity Resolving Key (IRK) des jeweils Anderen und können somit ihre Identität demonstrieren. Die Kommunikation wird nur fortgesetzt, wenn der jeweils andere als Pairing-Partner eindeutig erkannt ist. Die Identität ist gesichert, da das IRK-Paar im Schutzbereich, insbesondere in der Produktion, generiert und ggf. im Feld periodisch erneuert wird.

Die Erzeugung und Speicherung der Pairing-Geheimnisse erfolgt in einer gesicherten Produktionsumgebung (allgemein: Schutzbereich). Ein Pre-Pairing des Moduls findet mit einem Pairing-Master (allgemein: -Partner) zum Erzeugen von einem oder mehreren Pairing-Geheimnissen statt. Ein Element, insbesondere der Pairing-Master, speichert die Pairing-Geheimnisse in geschützten Dateien/Datenobjekten.

Es wird das Sicherheitsprotokoll "LE Secure Connections" mit der Version "Just Works" verwendet. Die Geheimnisse werden für das endgültige Pairing in das KommunikationsModul in der gesicherten Produktionsumgebung aufgebracht. Dadurch wird eine sekundäre Schnittstelle auf dem Modul, welche für die Authentifizierung notwendig wäre, eingespart. Die in der Produktion generierten Pairing-Geheimnisse sind das Initial IRK-Paar; und optional das Service IRK-Paar. Die Initial IRK Paare dienen z.B. dem initialen Pairing im Feld, während die Service IRK Paare für Reparatur- und Servicezwecke einzusetzen sind.

Der akzeptierte Pairing-Partner für das Modul wird durch Identifizieren des Moduls (dessen Kennung) ermittelt. Eindeutiges Identifikationsmerkmal (Kennung) kann QR-Code, Strichcode, eine eindeutige Zahlenkombination oder ein BLE Beacon sein. Die Informationen werden z.B. zentral (also von der Gegenstelle) über eine gesicherte Tertiär-WAN-Schnittstelle oder einen gesicherten Datencontainer (allgemein: geschütztes Datenobjekt) zur Verfügung gestellt.

Das komplementäre Geheimnis des Zählers wird mit einer gesicherten sekundären Schnittstelle auf den Zähler gesichert (insbesondere in diesem abgelegt).

Mit Hilfe eines Secure Elements auf beiden Seiten, generieren beide Geräte eigene IRK(s). Das Secure Element bezeichnet hierbei einen mit zusätzlichen Hardware- und Softwarefunktionen versehenen Chip, der u.a. in der Lage ist, Zufallszahlen zu generieren, Nachrichten zu ver- und entschlüsseln, Hashsummen zu kalkulieren und Geheimnisse sicherer als herkömmliche Microcontroller, abzuspeichern.

Die geschützte Datei/Datenobjekt beschreibt ein in der Produktion generiertes, gerätespezifisches Dokument, welches zur Identifikation und zum Pairing notwendige Informationen zu dem produzierten Gerät enthält.

Das RNA Modul (allgemein: Kommunikationsmodul) speichert beide IRK Paare in seinem Secure Element. Das RNA Modul geht nun davon aus, dass die beiden erhaltenen IRKs ihren festen Kommunikationspartner, sprich einen realen Zähler im Feld, beschreiben (Inital- und Service-IRK).

Der Zähler enthält keine Pairing-Konfiguration in der Produktion.

Für das initiale Pairing im Feld werden der Zähler, das RNA Modul und z.B. ein Mobile Device benötigt. Dieses Mobile Device gehört zur Ausrüstung des Installateurs, der für die Inbetriebnahme der Geräte im Feld zuständig ist. Das Mobile Device ist mit einer vorab installierten Applikation des Verantwortlichen, z.B. Hersteller des Kommunikationsmoduls, versehen.

Die eindeutige Identifikation des RNA Moduls im Feld ermöglicht die Auswahl der gerätespezifischen Informationen für das initiale Pairing. Eindeutiges Identifikationsmerkmal (Kennung) kann QR-Code, Strichcode, eine eindeutige Zahlenkombination oder ein BLE Beacon sein.

Die Konfiguration des Zählers im Feld erfolgt durch das Mobile Device. Hierfür wird die Sekundär-Schnittstelle am Zähler verwendet. Im Zuge dessen, übergibt das Mobile Device auch die IRKs an den Zähler.

Jedes Active IRK Paar hat insbesondere eine festgelegte, begrenzte Lebensdauer. Bevor diese abläuft, einigen sich beide Kommunikationspartner auf ein neues Active IRK Paar.

Gemäß der Erfindung ergibt sich daher eine leistungsoptimierte Identifikationsprozedur für Metering-Anwendungen.

Die Erfindung beschreibt die Konfiguration eines vom Zähler getrennten Kommunikationsmoduls (RNA) in der Produktion, bei der ersten Inbetriebnahme im Feld und beim Einsatz beider Geräte im Feld. Es wird beschrieben, wie eine dauerhafte, leistungsoptimierte und sichere Kommunikation zwischen beiden Geräten aufgebaut wird.

Gemäß der Erfindung ergibt sich, dass an einen Zähler über BLE ein bzw. mehrere RNA-Modul(e) gekoppelt wird (werden), das (die) zur Kommunikation der Zählerdaten dient (dienen). Je nach der im RNA-Modul implementierten Netzwerktechnologie werden die Zählerdaten mit verschiedenen Netzwerktechnologien übermittelt bzw. Daten empfangen. Zur Verbindung zwischen Zähler und Modul wird ein Pairing mit BLE-Security durchgeführt. Für einen Batteriebetrieb von Zähler und Modul ist dabei sichergestellt, dass bei BLE-Kommunikation der Leistungsverbrauch bei Identifizierung, Authentifizierung und Verschlüsselung in jedem Anwendungsfall vorhersehbar niedrig ist, zu keiner Zeit den Leistungsverbrauch beeinflusst und/oder die Funktionalität einschränkt.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:

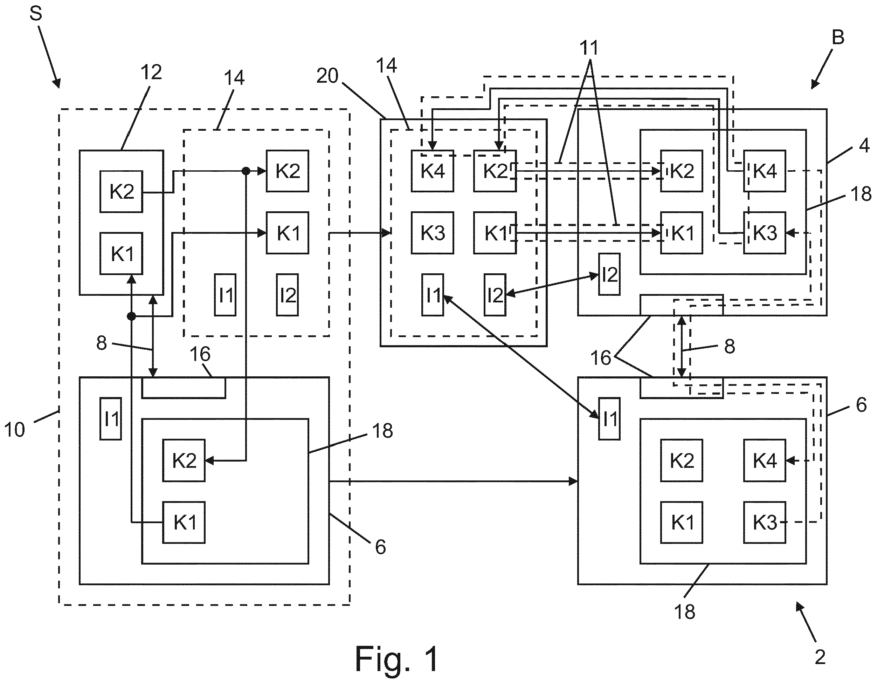

- Figur 1: eine Zähleranordnung mit einem Schutz- und einem Betriebszustand.

Figur 1 zeigt eine Zähleranordnung 2, die einen Zähler 4 und ein Kommunikationsmodul 6 enthält. In einem Betriebszustand B sind beide miteinander gepaart, d.h. über eine fest zugeordnete, gesicherte, identifizierte und authentifizierte Nahbereichs(NB)-Kommunikationsverbindung 8 (hier durch einen Doppelpfeil angedeutet) miteinander zur gegenseitigen NB-Kommunikation verbunden. Die Verbindung entsteht durch Paarung (Pairing) von Zähler 4 und Kommunikationsmodul 6. Die NB-Kommunikationsverbindung 8 ist im Beispiel eine Bluetooth-Low-Energy(BLE)-Verbindung, wobei eine Paarung mit BLE-Security bzw. dem Sicherheitsprotokoll "LE Secure Connections" in der Version "Just Works" durchgeführt wurde.

Ein Verfahren zum Paaren des Zählers 4 mit dem Kommunikationsmodul 6 zum Aufbau der Kommunikationsverbindung 8 zwischen beiden wird wie folgt durchgeführt:
Zunächst wird das Kommunikationsmodul 6 in eine Schutzumgebung 10 gebracht. Im Beispiel ist die Schutzumgebung 10 ein Bereich einer Fertigungsstätte für das Kommunikationsmodul 6. Dem Kommunikationsmodul 6 wird ein erster Identitäts-Schlüssel K1 für die spätere Paarung zugewiesen bzw. zugeordnet. Der Schlüssel K1 ist hier ein IRK (Identity Resolving Key). Dieser wird mithilfe des Kommunikationsmoduls 6 selbst erzeugt. Hierzu wird innerhalb der Schutzumgebung 10 dem Kommunikationsmodul 6 ein Pairing-Partner 12 zugeordnet. Kommunikationsmodul 6 und Pairing-Partner 12 führen eine Vor-Paarung durch. Diese entspricht prinzipiell der üblichen Paarung gemäß der Verfahren bzw. Technologien: BLE / BLE-Security / LE-Secure-Connections / Just Works. Allerdings findet die Paarung innerhalb der Schutzumgebung 10 und mit dem Pairing-Partner 12 anstelle des beabsichtigten Zählers 4 statt und wird unter anderem daher als "Vor-Paarung" bezeichnet. Neben dem Schlüssel K1 wird bei dieser Vor-Paarung auch ein Schlüssel K2 im Pairing-Partner 12 erzeugt, der dem Zähler 4 als zweiter Identitäts-Schlüssel K2 zugewiesen bzw. zugeordnet wird. Beide Schlüssel K1, K2 werden also innerhalb der Schutzumgebung 10 erzeugt und ausgetauscht, so dass sowohl das Kommunikationsmodul 6 als auch der Pairing-Partner 12 am Ende der Vor-Paarung über beide Schlüssel K1, K2 verfügen.

Um die entsprechenden Zuordnungen eindeutig zu gestalten, wird dem Kommunikationsmodul 6 und dem Schlüssel K1 eine Kennung I1 und dem Zähler 4 und dem Schlüssel K2 eine Kennung I2 zugeordnet. Im Beispiel sind die Kennungen I1, I2 QR-Codes bzw. deren inhärente Information.

Beide Schlüssel K1 und K2 werden also innerhalb der Schutzumgebung 10 im Kommunikationsmodul 6 abgelegt. Nebenbei werden diese auch im Pairing-Partner 12 abgelegt.

Dank der Schutzumgebung 10 ist sichergestellt, dass keine Gelegenheit durch einen Dritten besteht, z.B. durch Abhören des Vor-Paarungs-Vorgangs oder durch einen MITM(Man-in-the-middle)-Angriff usw., an das Pairing-Geheimnis (Schlüssel K1, K2) zu gelangen.

Das Kommunikationsmodul 6 kann nun aus der Schutzumgebung 10 entfernt und an seinen Einsatzort im Feld verbracht werden (in Fig. 1 angedeutet durch einen Pfeil). Der Einsatzort befindet sich in Reichweite der Kommunikationsverbindung 8 zum Zähler 4. Somit befindet sich das Kommunikationsmodul 6 im Betriebszustand B.

Für die Paarung sind nun außerdem beide Schlüssel K1 und K2 noch auf einem geschützten Weg, d.h. "sicher" in den Zähler zu verbringen und in diesem abzulegen. Auch hier soll Dritten keine entsprechende Gelegenheit zur Erlangung der Schlüssel K1, K2 gegeben werden.

Die Schlüssel K1, K2 werden daher noch innerhalb der Schutzumgebung 10 aus dem Pairing-Partner 12 in ein geschütztes Datenobjekt 14 verbracht und in diesem bevorratet, in dem sie durch geeignete Sicherheitsmechanismen (Zugriffsschutz, Verschlüsselung, Authentifizierung usw.) gegen unberechtigten Zugriff geschützt sind. Die konkrete bzw. "richtige" Zuordnung von Kommunikationsmodul 6 und Zähler 4 und der Schlüssel K1, K2 wird in Form der Kennungen I1, I2 ebenfalls im Datenobjekt 14 abgelegt.

Das geschützte Datenobjekt 14 wird nun aus der Schutzumgebung 10 entfernt und zum Zähler 4 verbracht (wieder durch einen Pfeil angedeutet). Im Beispiel geschieht dies durch Transport in einem Mobilgerät 20 (Mobile Device) eines Installateurs. Aus dem Datenobjekt 14 heraus werden die Schlüssel K1, K2 dann auf dem geschützten Weg 11 (angedeutet durch eine gestrichelte Umrandung) in den Zähler 4 eingebracht bzw. dort abgelegt. Im Beispiel handelt es sich hierbei um eine verschlüsselte, authentifizierte und identifizierte Infrarotverbindung zum Mobilgerät 20. Der Zähler 4 befindet sich dabei also außerhalb der Schutzumgebung 10. Der geschützte Weg 11 schließt dabei auch das Verbringen in das Datenobjekt 14 und dessen Transport zum Zähler 4 mit ein. Angedeutet ist dies durch eine jeweilige Strichelung.

Der "Transport" kann auch in einer geschützten Datenübermittlung, z.B. über eine WAN-Verbindung, bestehen. Das Datenobjekt 14 braucht dann nicht mit bzw. in dem Mobilgerät mitgeführt zu werden. Die WAN-Verbindung erstreckt sich dann z.B. von einer nicht dargestellten Zentrale, in der die Schlüssel K1, K2 bevorratet sind, über das Mobilgerät 20 in der Nähe des Zählers 4 zum Zähler 4. Die WAN-Verbindung wird nur bei Bedarf, d.h. in dem Moment aufgebaut, wenn der Installateur sich vor Ort am Zähler 4 befindet und die Schlüssel K1,K2 in diesen einbringen möchte.

Um sicherzustellen, dass die Schlüssel im "richtigen" Zähler 4, der dem Kommunikationsmodul 6 tatsächlich zugeordnet ist, bzw. der richtigen Zähleranordnung 2 abgelegt werden, werden die beiden Kennungen I1, I2 gegenüber den im Datenobjekt 14 gespeicherten Kennungen I1, I2 überprüft.

Abschließend werden der Zähler 4 und das Kommunikationsmodul 6 außerhalb der Schutzumgebung 10, d.h. im Feld, also im Betriebszustand B, unter Verwendung der beiden Schlüssel K1, K2 gepaart.

Für den Betrieb der Kommunikationsverbindung 8 weisen sowohl Kommunikationsmodul 6 als auch Zähler 4 eine jeweilige Standard-Kommunikations-Hardware 16 auf. Vorliegend handelt es sich dabei um einen handelsüblichen BLE-Chip. Um die Sicherheit der Schlüssel K1, K2 weiter zu erhöhen, enthalten Zähler 4 und Kommunikationsmodul 6 ein jeweiliges Secure-Element 18. Dieses ist gegenüber der Hardware 16 bezüglich seines Sicherheitsstandards erhöht. So werden zum Beispiel im Element 18 die Schlüssel K1, K2 sicherer verwahrt. Das Secure-Element 18 ist außerdem für die Erzeugung höherqualitativer Zufallszahlen (besserer Zufallsgenerator), die Nachrichten-Ver- / und -Entschlüsselung, die Kalkulierung von Hashnummern usw. verantwortlich.

Weiterhin wurde im Kommunikationsmodul 6 noch innerhalb der Schutzumgebung 10 nach Erzeugung der Identitäts-Schlüssel K1, K2 die Möglichkeit zum Einspielen weiterer solcher Schlüssel dauerhaft deaktiviert.

In einer alternativen Variante ist vorgesehen, dass die Schlüssel K1, K2 fortan als "erste" Schlüssel angesehen werden. Es werden dann weitere "zweite" Identitäts-Schlüssel K3 für das Kommunikationsmodul 6 und K4 für den Zähler 4 im Betriebszustand B erzeugt. Dabei befinden sich also Kommunikationsmodul 6 und Zähler 4 außerhalb der Schutzumgebung 10. Dies soll zum Beispiel den Fall absichern, dass Zweifel an der Sicherheit der ersten Schlüssel K1, K2 auftreten. Die entsprechende Erzeugung der Schlüssel K3, K4 ist jedoch abhörsicher, da der Austausch der erzeugten Schlüssel (Übertragung von Schlüssel K3 zum Zähler 4 und von Schlüssel K4 zum Kommunikationsmodul 6) über die sichere Kommunikationsverbindung 8 auf geschütztem Weg erfolgt (angedeutet durch gestrichelte Pfeile). Fortan werden dann die zweiten Schlüssel K3, K4 anstelle der ersten Schlüssel K1, K2 für die Paarung von Zähler 4 und Kommunikationsmodul 6 bzw. für die Kommunikationsverbindung 8 benutzt.

Um auch die zweiten Schlüssel K3, K4 anderweitig weiterverwenden zu können, werden auch diese auf einem geschützten Weg (angedeutet durch gestrichelte Umrandung) in das Datenobjekt 14 verbracht und dort verwahrt.

### Bezugszeichenliste

- 2: Zähleranordnung
- 4: Zähler
- 6: Kommunikationsmodul
- 8: Kommunikationsverbindung
- 10: Schutzumgebung
- 11: Weg (geschützt)
- 12: Pairing-Partner
- 14: Datenobjekt
- 16: Kommunikations-Hardware
- 18: Secure-Element
- 20: Mobilgerät

- B: Betriebszustand
- S: Schutzzustand
- K1,3: Identitäts-Schlüssel (erster)
- K2,4: Identitäts-Schlüssel (zweiter)
- 11,2: Kennung

## Patentansprüche

1. Verfahren zum Paaren eines Zählers (4) mit einem Kommunikationsmodul (6) zum Aufbau einer Kommunikationsverbindung (8) zwischen beiden, bei dem:
- dem Kommunikationsmodul (6) ein erster Identitäts-Schlüssel (K1) für die Paarung, und
- dem Zähler (4) ein zweiter Identitäts-Schlüssel (K2) für die Paarung zugewiesen wird,
das Verfahren umfassend:
- Erzeugen des ersten Identitäts-Schlüssels (K1) und des zweiten Identitäts-Schlüssels (K2) innerhalb einer Schutzumgebung (10) mit Hilfe des Kommunikationsmoduls (6) dadurch, dass das Kommunikationsmodul (6) innerhalb der Schutzumgebung (10) mit einem Pairing-Partner (12) vor-gepaart wird, der sich innerhalb der Schutzumgebung (10) befindet,
- Ablegen des ersten Identitäts-Schlüssels (K1) und des zweiten Identitäts-Schlüssels (K2) innerhalb der Schutzumgebung (10) im Kommunikationsmodul (6) und im Pairing-Partner (12), wobei sich das Kommunikationsmodul (6) und der Pairing-Partner (12) innerhalb der Schutzumgebung (10) befindet, und
- anschließendes Entfernen des Kommunikationsmoduls (6) aus der Schutzumgebung (10),
- Verbringen und Bevorraten des ersten Identitäts-Schlüssels (K1) und des zweiten Identitäts-Schlüssels (K2) innerhalb der Schutzumgebung (10) aus dem Pairing-Partner (12) in ein geschütztes Datenobjekt (14) und Bevorraten des ersten Identitäts-Schlüssels (K1) und des zweiten Identitäts-Schlüssels (K2) in dem geschützten Datenobjekt (14),
- Entfernen des geschützten Datenobjekts (14) aus der Schutzumgebung (10) und Verbringen des geschützten Datenobjekts (14) zum Zähler (4) und dabei Entfernen des ersten Identitäts-Schlüssels (K1) und des zweiten Identitäts-Schlüssels (K2) innerhalb des Datenobjekts (14) aus der Schutzumgebung,
- Ablegen des ersten Identitäts-Schlüssels (K1) und des zweiten Identitäts-Schlüssels (K2) aus dem geschützten Datenobjekt (14) heraus auf einem geschützten Weg (11) im Zähler (4) , wobei sich der Zähler (4) außerhalb der Schutzumgebung (10) befindet,
- Paaren des Zählers (4) und des Kommunikationsmoduls (6) außerhalb der Schutzumgebung (10) unter Verwendung des ersten Identitäts-Schlüssels (K1) und des zweiten Identitäts-Schlüssels (K2).

2. Verfahren nach Anspruch 1,
**dadurch gekennzeichnet, dass**
als Kommunikationsverbindung (8) eine NB-Verbindung aufgebaut wird.

3. Verfahren nach Anspruch 2,
**dadurch gekennzeichnet, dass**
als Identitäts-Schlüssel (K1,K2) IRKs verwendet werden.

4. Verfahren nach einem der Ansprüche 1 bis 3,
**dadurch gekennzeichnet, dass**
ausgehend von beiden Identitäts-Schlüsseln (K1,K2) als ersten Identitäts-Schlüsseln zweite Identitäts-Schlüssel (K3,K4) erzeugt werden, wenn sich Kommunikationsmodul (6) und Zähler (4) außerhalb der Schutzumgebung (10) befinden, und die zweiten Identitäts-Schlüssel (K3,K4) anstelle der ersten Identitäts-Schlüssel (K1,K2) für das weitere Paaren benutzt werden.

5. Verfahren nach Anspruch 4,
**dadurch gekennzeichnet, dass**
die zweiten Identitäts-Schlüssel (K3,K4) in einem geschützten Datenobjekt (14) bevorratet werden

6. Verfahren nach einem der Ansprüche 1 bis 3,
**dadurch gekennzeichnet, dass**
im Kommunikationsmodul (6) und/oder im Zähler (4) eine Möglichkeit zur Erzeugung und/oder Einspielung weiterer Identitäts-Schlüssel (K3,K4) dauerhaft abgeschaltet wird oder gar nicht vorgesehen wird.

7. Verfahren nach einem der vorhergehenden Ansprüche,
**dadurch gekennzeichnet, dass**
das Kommunikationsmodul (6) und/oder der Zähler (4) eine Kommunikations-Hardware (16) für den Betrieb der Kommunikationsverbindung (8) enthält, und im Kommunikationsmodul (6) und/oder im Zähler (4) neben der Kommunikations-Hardware (16) ein Secure-Element (18) vorgesehen wird, das die Identitäts-Schlüssel (K1-K4) verwaltet.

8. Verfahren nach einem der vorhergehenden Ansprüche,
**dadurch gekennzeichnet, dass**
die Identitäts-Schlüssel (K1,K2) mit Hilfe eines sich außerhalb der Schutzumgebung (10) befindlichen Mobilgerätes (20) im Zähler (4) abgelegt werden.

9. Verfahren nach einem der vorhergehenden Ansprüche,
**dadurch gekennzeichnet, dass**
dem Zähler (4) und/oder dem Kommunikationsmodul (6) eine eindeutige Kennung (I1,I2) verliehen wird und eine Zuordnung zwischen Kennung (I1,I2) und den Identitäts-Schlüsseln (K1-K4) innerhalb der Schutzumgebung (10) und/oder im geschützten Datenobjekt (14) bevorratet wird.

## Claims

1. Method for pairing a meter (4) with a communication module (6) for establishing a communication connection (8) between the two, in which method:
- the communication module (6) is allocated a first identity key (K1) for the pairing, and
- the meter (4) is allocated a second identity key (K2) for the pairing,
the method comprising:
- generating the first identity key (K1) and the second identity key (K2) within a protective environment (10) with the aid of the communication module (6) by way of pre-pairing the communication module (6) within the protective environment (10) with a paring partner (12) situated within the protective environment (10),
- storing the first identity key (K1) and the second identity key (K2) within the protective environment (10) in the communication module (6) and in the pairing partner (12), the communication module (6) and the pairing partner (12) being situated within the protective environment (10), and
- subsequently removing the communication module (6) from the protective environment (10),
- taking and keeping available the first identity key (K1) and the second identity key (K2) within the protective environment (10) from the pairing partner (12) into a protected data object (14) and keeping available the first identity key (K1) and the second identity key (K2) in the protected data object (14),
- removing the protected data object (14) from the protective environment (10) and taking the protected data object (14) to the meter (4) and in so doing removing the first identity key (K1) and the second identity key (K2) within the data object (14) from the protective environment,
- storing the first identity key (K1) and the second identity key (K2) out of the protected data object (14) on a protected path (11) in the meter (4), the meter (4) being situated outside the protective environment (10),
- pairing the meter (4) and the communication module (6) outside the protective environment (10) using the first identity key (K1) and the second identity key (K2).

2. Method according to Claim 1,
**characterized in that**
a short-range connection is established as communication connection (8).

3. Method according to Claim 2,
**characterized in that**
IRKs are used as identity keys (K1, K2).

4. Method according to any of Claims 1 to 3,
**characterized in that**
proceeding from both identity keys (K1, K2) as first identity keys, second identity keys (K3, K4) are generated if communication module (6) and meter (4) are situated outside the protective environment (10), and the second identity keys (K3, K4) are used instead of the first identity keys (K1, K2) for the further pairing.

5. Method according to Claim 4,
**characterized in that**
the second identity keys (K3, K4) are kept available in a protected data object (14).

6. Method according to any of Claims 1 to 3,
**characterized in that**
in the communication module (6) and/or in the meter (4) a possibility for generating and/or importing further identity keys (K3, K4) is permanently switched off or is not provided at all.

7. Method according to any of the preceding claims,
**characterized in that**
the communication module (6) and/or the meter (4) contain(s) communication hardware (16) for operating the communication connection (8), and, besides the communication hardware (16), a secure element (18) that manages the identity keys (K1-K4) is provided in the communication module (6) and/or in the meter (4).

8. Method according to any of the preceding claims,
**characterized in that**
the identity keys (K1, K2) are stored in the meter (4) with the aid of a mobile device (20) situated outside the protective environment (10).

9. Method according to any of the preceding claims,
**characterized in that**
a unique identifier (11, 12) is conferred on the meter (4) and/or the communication module (6) and an assignment between the identifier (11, 12) and the identity keys (K1-K4) is kept available within the protective environment (10) and/or in the protected data object (14) .

## Revendications

1. Procédé d'appariement entre un compteur (4) et un module de communication (6) afin d'établir une liaison de communication (8) entre les deux, procédé dans lequel :
- une première clé d'identité (K1) destinée à l'appariement est attribuée au module de communication (6), et
- une deuxième clé d'identité (K2) destinée à l'appariement est attribuée au compteur (4), le procédé comprenant les étapes suivantes :
- générer la première clé d'identité (K1) et la deuxième clé d'identité (K2) à l'intérieur d'un environnement sécurisé (10) à l'aide du module de communication (6) en ce que, à l'intérieur de l'environnement sécurisé (10), le module de communication (6) est pré-apparié à un partenaire d'appariement (12) qui se trouve à l'intérieur de l'environnement sécurisé (10),
- déposer la première clé d'identité (K1) et la deuxième clé d'identité (K2) à l'intérieur de l'environnement sécurisé (10) dans le module de communication (6) et dans le partenaire d'appariement (12), le module de communication (6) et le partenaire d'appariement (12) se trouvant à l'intérieur de l'environnement sécurisé (10), et
- puis retirer le module de communication (6) de l'environnement sécurisé (10),
- transférer et stocker la première clé d'identité (K1) et la deuxième clé d'identité (K2) à l'intérieur de l'environnement sécurisé (10) du partenaire d'appariement (12) jusque dans un objet de données protégé (14) et stocker la première clé d'identité (K1) et la deuxième clé d'identité (K2) dans l'objet de données protégé (14),
- retirer l'objet de données protégé (14) de l'environnement sécurisé (10) et transférer l'objet de données protégé (14) au compteur (4) et retirer alors la première clé d'identité (K1) et la deuxième clé d'identité (K2) à l'intérieur de l'objet de données (14) de l'environnement sécurisé,
- enlever la première clé d'identité (K1) et la deuxième clé d'identité (K2) de l'objet de données protégé (14) sur un chemin protégé (11) dans le compteur (4), le compteur (4) se trouvant à l'extérieur de l'environnement sécurisé (10),
- apparier le compteur (4) et le module de communication (6) à l'extérieur de l'environnement sécurisé (10) à l'aide de la première clé d'identité (K1) et de la deuxième clé d'identité (K2).

2. Procédé selon la revendication 1,
**caractérisé en ce que**
une liaison NB est établie comme liaison de communication (8).

3. Procédé selon la revendication 2,
**caractérisé en ce que**
les IRK peuvent être utilisés comme clés d'identité (K1, K2).

4. Procédé selon l'une des revendications 1 à 3,
**caractérisé en ce que**
des deuxièmes clés d'identité (K3, K4) sont générées à partir des deux clés d'identité (K1, K2) comme premières clés d'identité lorsque le module de communication (6) et le compteur (4) se trouvent à l'extérieur de l'environnement sécurisé (10), et les deuxièmes clés d'identité (K3, K4) sont utilisées à la place des premières clés d'identité (K1, K2) pour l'appariement ultérieur.

5. Procédé selon la revendication 4,
**caractérisé en ce que**
les deuxièmes clés d'identité (K3, K4) sont stockées dans un objet de données protégé (14).

6. Procédé selon l'une des revendications 1 à 3,
**caractérisé en ce que**
dans le module de communication (6) et/ou dans le compteur (4), la possibilité de générer et/ou installer d'autres clés d'identité (K3, K4) est désactivée en permanence ou n'est pas prévue du tout.

7. Procédé selon l'une des revendications précédentes,
**caractérisé en ce que**
le module de communication (6) et/ou le compteur (4) contiennent du matériel de communication (16) destiné à faire fonctionner la liaison de communication (8), et un élément sécurisé (18), qui gère les clés d'identité (K1-K4) est prévu dans le module de communication (6) et/ou dans le compteur (4) en plus du matériel de communication (16).

8. Procédé selon l'une des revendications précédentes,
**caractérisé en ce que**
les clés d'identité (K1, K2) sont stockées dans le compteur (4) à l'aide d'un appareil mobile (20) situé à l'extérieur de l'environnement sécurisé (10).

9. Procédé selon l'une des revendications précédentes,
**caractérisé en ce que**
le compteur (4) et/ou le module de communication (6) reçoivent un identifiant unique (I1, 12) et une association entre l'identifiant (I1, 12) et les clés d'identité (K1-K4) est stockée à l'intérieur de l'environnement sécurisé (10) et/ou dans l'objet de données protégé (14).
